# EUROPÄISCHE PATENTSCHRIFT

(11) **EP 2 993 548 B1**
(45) Veröffentlichungstag und Bekanntmachung des Hinweises auf die Patenterteilung: **06.09.2023**
(21) Anmeldenummer: 15173734.3
(22) Anmeldetag: 25.06.2015
(51) Int. Cl.: G05F 1/10, G05B 9/03, H02J 3/46

(54) **REGELUNG EINER SPANNUNGSEINSPEISUNG**
CONTROL OF A VOLTAGE FEED-IN
RÉGLAGE D'UNE ALIMENTATION EN TENSION

(30) Priorität: 06.08.2014 AT 505502014
(43) Veröffentlichungstag der Anmeldung: 09.03.2016
(73) Patentinhaber: Siemens AG Österreich, 1210 Wien (AT)
(72) Erfinder: Mosshammer, Ralf, 1020 Wien (AT); Einfalt, Alfred, 1210 Wien (AT); Zeilinger, Franz, 1200 Wien (AT); Lugmaier, Andreas, 1140 Wien (AT)
(74) Vertreter: Siemens Patent Attorneys

(56) Entgegenhaltungen:
- EP-A1- 2 482 415
- WO-A1-97/18502
- WO-A1-03/073182
- DE-A1- 3 225 455
- US-A1- 2005 231 125
- US-A1- 2005 232 145

## Beschreibung

### Technisches Gebiet

Die Erfindung betrifft ein Verfahren zur Regelung einer Spannungseinspeisung in ein Niederspannungsnetz mittels Gesamtnetzdaten, welche aus dem Niederspannungsnetz, welches zahlreiche Netzknoten aufweist, von mehreren Netzknoten gewonnen werden. Darüber hinaus offenbart die vorliegende Erfindung eine zugehörige Vorrichtung zur Regelung einer solchen Spannungseinspeisung.

Niederspannungsnetze sind ein Teil des Stromnetzes zur Verteilung der elektrischen Energie an den größten Teil der elektrischen Endverbraucher, der aus Niederspannungsgeräten besteht. Um Spannungsverluste zu vermeiden, sind Niederspannungsnetze in der räumlichen Ausdehnung auf einen Bereich von einigen 100 m bis zu einigen wenigen Kilometern beschränkt. Sie werden daher regional über Transformatorenstationen aus einem übergeordneten Mittelspannungsnetz gespeist. Sie werden in Europa üblicher Weise mit einer Netzspannung von 230 V (zwischen jedem Außenleiter und dem Neutralleiter) bzw. 400 V (zwischen den drei Außenleitern), jedenfalls aber nur bis zu 1000 V betrieben. Bemessungsleistungen einzelner Ortsnetztransformatoren können je nach Zielnetzplanung des jeweiligen Verteilnetzbetreibers variieren, liegen aber typischer Weise bei 250 oder 400 kVA für ländliche Gebiete und 630 oder 800 kVA für innerstädtische Gebiete.

Komponenten des Niederspannungsnetzes können sein: Stromerzeuger (z.B. Photovoltaikanlagen, Kleinwindkraftanlagen), Speicher (z.B. Batterien, Wärmepumpen), Ladestationen für Elektrofahrzeuge, flexible Verbraucher (z.B. elektrische Speicherheizungen, Gebäude mit und ohne Gebäudeautomationssystem) und Netzbetriebsmittel (Transformatoren, Leitungen, Sicherungen, Messgeräte wie Smart Meter,...).

### Stand der Technik

In den letzten Jahren zeigte sich aufgrund der steigenden Anzahl von Verbrauchern, wie aufgrund der E-Mobilität, ein Bedarf an zusätzlichen Spannungseinspeisungen. Dahingehend sind aus dem Stand der Technik diverse verteilte Anlagen zur dezentralen Einspeisung, wie Photovoltaikanlagen oder erneuerbare Einspeiser, bekannt. Jedoch zeigten sich speziell bei Niederspannungsnetzen mit vielen Netzknoten immer größere Probleme aufgrund des steigenden Verbrauches, da ein manuelles Anbringen, Konfigurieren und Warten der hohen Anzahl an Netzknoten bzw. Messpunkte in der Praxis aufwändig und unrentabel ist. Dabei führte die Anbindung der Messpunkte über Verbindungen mit niedrigem Durchsatz, beispielsweise GPRS-Modems oder PLC (Powerline Communications), zu stark asynchronem Eintreffen der Messwerte. Überdies können Teil- und Totalausfälle der Kommunikation, beispielsweise durch ungünstige Kanalbedingungen aufgrund von Netzauslastungen auftreten, wodurch ein Ausfall des Reglers durch fehlende Messdatenanlieferung auftritt sowie die Netzstabilität bedroht ist, da der Netzzustand für den Regler unbekannt ist.

Diese Ausfälle der Messdatenanlieferung sowie Netzwartungsarbeiten bewirken, dass die Regler im Niederspannungsnetz jedes Mal deaktiviert und im Anschluss reaktiviert werden müssen, wodurch ein sicherer "ad hoc" Betrieb bzw. eine unterbrechungsfreie Fortführung der Regelung verhindert wird, da zur Findung einer Regelentscheidung eine gewisse Datenbasis, d.h. eine Menge an Dateninformationen (Spannungswerte, Verfügbarkeit an Netzknoten, etc.), benötigt wird, welche beispielsweise zu einer Mittelwert- oder Medianbildung herangezogen wird. Darüber hinaus liegen in einem Niederspannungsnetz oft weit verteilte Netzknoten mit störanfälligen Kommunikationslösungen zur Regelung vor.

Aus der Schrift EP 2 482 415 A1 ist z.B. eine Steuermethode für einen Laststufenschalter eines Leistungstransformators in einem Hochspannungsnetz sowie eine System zur Durchführung der Steuermethode bekannt. Dabei wird die Steuermethode vor allem dazu eingesetzt, um durch die Regelung des Laststufenschalters einen Blindleistungsfluss über den Leistungstransformator zu regulieren, welche sich an einer Grenze zwischen einem Primärnetz (= Netz, in welchem mittels eines Generators aus mechanischer elektrische Energie erzeugt wird) und einem Sekundärnetz, in welchem die elektrische Energie verbraucht wird, befindet.

Aus der Schrift DE 32 25 455 A1 ist ein Verfahren zum sicheren Betrieb eines redundanten Steuersystems sowie eine zugehörige Anordnung bekannt, wobei das System aus mehreren parallel geschalteten Rechner aufgebaut ist. Für ein schnelles Erkennen und Abschalten einer defekten Rechnereinheit werden die in den jeweils gleichen Bausteinen der Rechnereinheiten anfallenden Daten über einen Systembus einem Überwachungssystem zugeführt, welches im Fehlerfall eine Abschaltung einer defekten Rechnereinheit bewirkt.

Auch die Schrift US 2005/232145 A1 offenbart ein System sowie ein Verfahren, um eine redundante Kommunikation mit einer elektronischen Einheit zur Verfügung zu stellen. Dabei sind eine erste und eine zweite Mastereinheit sowie einen Slave-Einheit an einen Redundanzmanager angeschlossen. Der Redundanzmanager kann von der ersten wie von der zweiten Mastereinheiten einen Datenstrom erhalten und selektiv einer der beiden Datenströme an die Slave-Einheit anhand von Priorisierungsfaktoren weiterleiten, wobei die Priorisierungsfaktoren derart berechnet werden, dass eine gültige Kommunikation mit der Slave-Einheit optimiert wird.

Weiterhin ist aus der Schrift US 2005/231125 A1 eine Beleuchtungsinstallation bekannt, welche eine Regelung der Lichtemissionseinheiten aufweist. Die Lichtemissionseinheiten sind an eine elektrische Versorgungsleitung angeschlossen und jeder Lichtemissionseinheit ist Kontrolleinheit zugeordnet, welche Daten, die über die elektrische Versorgungsleitung übertragen werden, empfangen kann. Weiterhin sind Einheiten zum Generieren eine Lichtemissionsregelsignals vorgesehen sowie eine Steuereinheit, von welcher Daten an die Kontrolleinheiten gesendet werden können. Die Steuereinheit kann dabei zumindest ein Datenelement an die Kontrolleinheiten der Lichtemissionseinheiten senden, durch welches die Abgabe von Licht geregelt werden.

Weiterhin ist aus der Schrift WO 03/073182 A1 ein Verfahren zum Optimieren eines redundanten, kritischen Steuersystems sowie ein zugehöriges System bekannt, wobei charakteristische Information für einen laufenden Betrieb eines industriellen Energieverteilungssystems empfangen wird und alternative Konfigurationen des Energieverteilungssystems bestimmt, welche mit dieser Information konsistent sind. Für jede alternative Konfiguration wird dann einen Effizienz-Charakteristik bestimmt und eine Konfiguration ausgewählt.

### Darstellung der Erfindung

Es ist daher eine Aufgabe der vorliegenden Erfindung, unabhängig von der tatsächlichen Anzahl an Netzknoten bzw. Messpunkten und einer sicheren Kommunikation zu einer zentralen Regelstelle, beispielsweise einer lokalen Trafostation, die Koordinierung des Niederspannungsnetzes auch bei unbekannten Netzzuständen aufgrund von Ausfällen der Messdatenanlieferung sicher zu stellen.

Diese Aufgabe wird durch ein Verfahren mit den Merkmalen des Patentanspruchs 1 gelöst.

Mit anderen Worten sind zumindest zwei redundante Regelstufen, welche eingangsseitig jeweils einem Netzknoten zugeordnet sind und mit jeweils unterschiedlichen Netzdaten des Niederspannungsnetzes versorgt werden, mit einem Supervisor ausgangsseitig jeweils derart verschaltet, dass dieser basierend auf den eingangsseitigen Stellbefehlen einer redundanten Regelstufe Steuerbefehle zur Spannungseinspeisung an zumindest einen Aktuator weiterleitet, wenn zumindest von einer der zumindest zwei Regelstufen eine vorgegebene Anzahl der unterschiedlichen Netzdaten gesammelt wurde.

Hierbei ist vorgesehen, dass die Regelstufen eine Statusinformation an den Supervisor senden, welche angibt, ob die jeweilige Regelstufe eine vorgegebene Anzahl an Netzdaten gesammelt hat. Denn nur in diesem Fall wird der Supervisor deren Stellbefehle als Steuerbefehle weitersenden. Der Vorteil dabei ist, dass eine beliebige Anzahl von Regelstufen parallel laufen und entsprechend den jeweils vorhandenen Daten Stellbefehle senden. Gemäß einer vordefinierten Priorisierung wird jeweils die höchste, dabei handelt es sich um die qualitativ hochwertigste, Regelstufe durchgeschaltet, was bedeutet, dass deren Stellbefehle auch an die Aktuatoren gehen. Im Falle eines Ausfalls einer höheren Regelstufe aufgrund eines z.B. plötzlichen Kommunikationsausfalls kann unterbrechungsfrei die nächste im Hintergrund laufende Regelstufe durchgeschaltet werden.

Es wäre möglich, dass die Statusinformation der redundanten Regelstufe einen von drei Zuständen umfasst:
- "online": Die Regelstufe ist in Betrieb und mit dem Eingangsabbild als gemeinsame Datenbasis verbunden, wobei noch keine relevanten Eingangs- bzw. Netzdaten vorhanden sind;
- "prestart": Die Regelstute ist in Betrieb und mit dem Eingangsabbild als gemeinsame Datenbasis verbunden, wobei die Regelstufe bereits erste Netzdaten erhalten hat, jedoch weniger als eine vorgegebene Anzahl; und
- "active": Die Regelstute ist in Betrieb und mit dem Eingangsabbild als gemeinsame Datenbasis verbunden, wobei sie bereits genügend Eingangs- bzw. Messdaten erhalten hat,um Stellbefehle an den Supervisor zu senden.

Von Vorteil ist auch, wenn der Supervisor in Abhängigkeit einer den redundanten Regelstufen jeweils fest zugeordneten Priorität die Stellbefehle einer Regelstufe als Steuerbefehle weiterleitet.

Dabei kann die Priorität der redundanten Regelstufen zusätzlich durch die Güte der Gesamtnetzdaten beeinflusst werden. Die höhere Güte der Gesamtnetzdaten ergibt sich mittels der höheren Qualität des dadurch dem Regler vermittelten Netzabbildes, so hat z.B. eine Stufe, welche die Messpunkte aus dem Netz miteinbezieht, eine höhere Güte als eine Stufe, die nur die Daten aus der Transformatorstation miteinbezieht. Falls es beispielsweise noch eine intelligentere Stufe gibt, in der auch ein topologisches Netzmodell vorliegen muss, damit auch nicht gemessene Netzknoten geschätzt werden können, so hat diese intelligentere Stufe eine noch höhere Güte.

Die Priorität der redundanten Regelstufen wird zusätzlich durch eine Länge eines Übertragungsweges von der Regelstufe zu dem der Regelstufe zugehörigen Netzknoten beeinflusst. Die höhere Güte der Gesamtnetzdaten ergibt sich durch die Qualität des dadurch dem Regler vermittelten Netzabbildes, so hat z.B. eine Stufe, welche die Messpunkte aus dem Netz miteinbezieht, eine höhere Güte als eine Stufe, welche nur die Daten aus der Transformatorstation miteinbezieht.

Werden sowohl Statusinformation als auch Priorität einer der zumindest zwei Regelstufen berücksichtigt, ist in der Regel erfindungsgemäß vorgesehen, dass eine der zumindest zwei Regelstufen bevorzugt wird, wenn:
- sie den Zustand "active" erreicht hat und
- keine Regelstufe mit höherer Priorität "active" ist.

Die erfindungsgemäß0e Aufgabe wird auch durch ein System mit den Merkmalen des Patentanspruchs 10 gelöst.

Der Supervisor fungiert als Schranke ("Gatekeeper") für die Stellbefehle, die von den Regelstufen ausgesendet werden. Er kann auch die Zustände der einzelnen Regelstufen überwachen.

### Kurzbeschreibung der Figuren

Zur weiteren Erläuterung der Erfindung wird im nachfolgenden Teil der Beschreibung auf die Figur Bezug genommen, aus der weitere vorteilhafte Ausgestaltungen, Einzelheiten und Weiterbildungen der Erfindung zu entnehmen sind. Dabei zeigt:

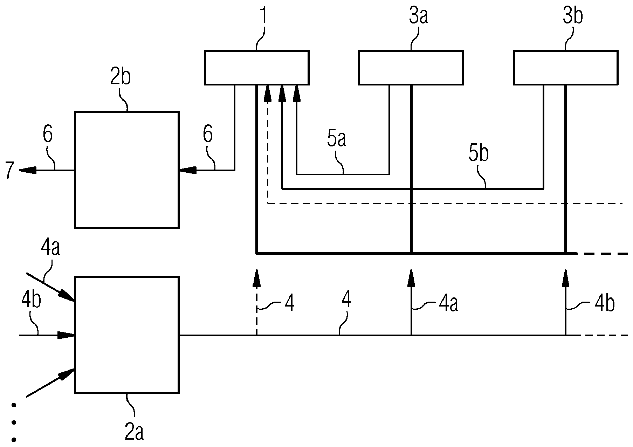

- Fig. 1: eine schematische Darstellung des prinzipiellen Schaltungsaufbaues zweier mit einem Supervisor verknüpften Regelstufen.

### Ausführung der Erfindung

Die Grundidee der in Fig. 1 dargestellten Lösung ist eine gestufte Regelung durch unabhängige Regelprozesse mit steigender Komplexität und steigendem Datenbedarf. Dabei arbeiten zwei redundante Regelstufen 3a,3b ständig im Parallelbetrieb, wobei ausdrücklich darauf hingewiesen wird, dass es sich zumindest um zwei Regelstufen 3a,3b handeln muss, um ein redundantes System zu schaffen. Die beiden redundanten Regelstufen 3a,3b erhalten unterschiedliche Netzdaten 4a,4b, verfolgen jedoch dieselbe Regelaufgabe. Ein übergeordnetes Modul ist als Supervisor 1 zur Überwachung der Zustände der einzelnen Regelstufen 3a,3b und als Schranke zum Durchlass der Stellbefehle 5a oder 5b der jeweils favorisierten Regelstufe 3a oder 3b in Form eines Steuerbefehles 6 tätig, wobei jeder einzelnen Regelstufe 3a,3b eine Priorität aufgrund der zu erwartenden Qualität der gefundenen Lösung basierend auf den erhaltenen Netzdaten 4a,4b zugeteilt ist.

Der Supervisor 1 entscheidet basierend auf der den Regelstufen 3a,3b jeweils zugeordneten Priorität und gegebenenfalls mit Hilfe der erhaltenen Gesamtnetzdaten 4, wobei die Regelstufen 3a,3b zusätzlich zu den Stellbefehlen 5a, 5b auch Statusinformationen mitsenden. Diese Statusinformationen dienen zur Entscheidungsfindung des Supervisors 1, welche Stellbefehle 5a,5b weitergeleitet bzw. in Form von Steuerbefehlen 6 durchgelassen werden. Zusätzlich kann der Supervisor 1 die Gesamtnetzdaten 4 zur Entscheidungsfindung heranziehen, falls ihm diese zur Verfügung stehen, wie in Fig. 1 durch den strichlierten Pfeil gekennzeichnet ist.

Dabei dient gegebenenfalls ein Eingangsabbild 2a als Datenbasis zum Sammeln und/oder Aufbereiten der erhaltenen Netzdaten 4a,4b der unterschiedlichen Netzknoten sowie ein Ausgangsabbild 2b als Datenbasis zum Sammeln und/oder Aufbereiten der weiterzuleitenden Steuerbefehle 6, welche den jeweiligen Stellbefehlen 5a,5b der Regelstufen 3a,3b entsprechen. Die Steuerbefehle 6 werden beispielsweise an einen Aktuator 7 weitergeleitet, welcher die notwendige Spannungseinspeisung durchführt.

Die Regelstufen 3a,3b können jeweils zumindest drei Zustände einnehmen. Hierbei wird in Abhängigkeit des jeweiligen Zustandes die Statusinformation mitsamt dem Stellbefehl 5a,5b an den Supervisor 1 gesendet.

Die drei Zustände sind in diesem Beispiel:
- "online": Die Regelstufe 3a,3b ist in Betrieb und mit dem Eingangsabbild 2a als gemeinsame Datenbasis verbunden, wobei noch keine relevanten Eingangs- bzw. Netzdaten 4a,4b vorhanden sind.
- "prestart": Die Regelstufe 3a,3b ist in Betrieb und mit dem Eingangsabbild 2a als gemeinsame Datenbasis verbunden, wobei die Regelstufe 3a,3b bereits erste Netzdaten 4a,4b erhalten hat, jedoch weniger als eine vorgegebene Anzahl.
- "active": Die Regelstufe 3a,3b ist in Betrieb und mit dem Eingangsabbild 2a als gemeinsame Datenbasis verbunden. Dabei hat sie bereits genügend Eingangs- bzw. Messdaten erhalten, um Stellbefehle 5a,5b an den Supervisor 1 zu senden.

Die Entscheidung zum Weiterleiten der Stellbefehle 5a,5b in Form eines Steuerbefehls 6 an einen Aktuator 7 trifft der Supervisor 1, basierend auf den mit den Stellbefehlen 5a,5b mitgeschickten Statusinformation der Regelstufen 3a,3b sowie einer Priorisierung. Dabei wird üblicherweise eine weniger komplexe Regelstufe 3a oder 3b, das ist eine Regelstufe 3a oder 3b, die auf eine geringere dafür aber stabilere Datenbasis zur Regelung zugreift bzw. mit solchen Netzknoten verbunden ist, niedriger priorisiert und fungiert somit als Ausfallsicherung. Hierbei wird vorausgesetzt, dass komplexere Lösungen auch eine höhere Qualität bei der Erreichung des Optimums bzw. eine höhere Regelgüte aufweisen, weshalb eine derartige Regelstufe 3a oder 3b vorzugsweise eingesetzt wird.

Das bedeutet, dass eine Regelstufe 3a oder 3b bevorzugt wird, wenn:
- sie den Zustand "active" erreicht hat und
- keine Regelstufe 3a oder 3b mit höherer Priorität "active" ist.

Dadurch wird garantiert, dass jene Regelstufe 3a oder 3b, die einer komplexeren Datenbasis zugeordnet ist und Netzdaten 4a oder 4b erhält, zur Regelung eingesetzt wird. Dies bedeutet auch, dass der Ausfall möglicherweise volatiler Messungen weder zum vollständigen Ausfall der Regelstufe 3a,3b noch zu einer Totzeit führt, da die Regelstufen 3a,3b parallel regeln und lediglich vom Supervisor 1 nicht freigeschaltet werden. Dadurch erfolgt ein "weicher" Übergang sowohl bei Ausfällen als auch beim Empfangen komplexer Netzdaten 4a,4b.

Darüber hinaus sieht der Supervisor 1 Latenzzeiten für gleichartige Stellbefehle 5a,5b vor, sodass bei einem Übergang zwischen den Regelstufen 3a,3b keine raschen sowie gegenläufigen Durchschaltungen auftreten. Im Allgemeinen handelt es sich bei einer Latenzzeit um jenen Zeitraum, welcher zwischen dem Auftreten eines Ereignisses und dem Auftreten eines erwarteten Folgeereignisses vergeht.

Zusammenfassend lässt sich sagen, dass ein bestimmter Stellbefehl, der gerade erst ausgeführt wurde, erst nach einer bestimmten Latenzzeit wieder zugelassen wird. Dabei hängt die Latenzzeit unter anderem von den jeweiligen Mittelungszeiten der Messdaten, den Übertragungszeiten, Zykluszeiten der Regler usw. ab.

Es kann somit jede Regelstufe 3a,3b, deren Datenbasis auf fernverteilten Sensoren basiert, eine Ausfallsicherung bei Ausfall der Kommunikation zur Verfügung stellen. Somit erlaubt das Konzept parallel laufender, prioritätsgestufter Regelstufen 3a,3b eine unterbrechungsfreie Fortführung der Regelung. Darüber hinaus bietet sich in dem Fall, dass der Supervisor 1 Gesamtnetzdaten 4 erhält, die Möglichkeit an, sogenannte Plausibilitätschecks durchzuführen, wodurch ein stabiler Netzbetrieb gewährleistet wird. Hierbei ist vorgesehen, dass die Statusinformation (online, prestart, active) der Regelstufen 3a,3b an den Supervisor 1 übermittelt werden.

Um obige Erläuterungen zum Aufbau und zur Funktionsweise zu verdeutlichen, wird im Anschluss ein Beispiel anhand der Regelung eines Transformators beschrieben. Dabei erhält die erste Regelstufe 3a, welche in gegenständlichen Fall die niedrigere Priorität aufweist, die gemessenen Netzdaten 4a von einer Sammelschiene des Transformators und sendet die Stellbefehle 5a an den Supervisor 1. Da diese Datenbasis somit lokal ist, kann man davon ausgehen, dass die Regelung hochstabil läuft, jedoch auf Änderungen des Niederspannungsnetzes nur ungenau und suboptimal reagiert. Die zweite Regelstufe 3b, welche die gemessenen Netzdaten 4b von verteilten Netzmesspunkten erhält, beispielsweise mittels PLC von Smart Metern, sendet die im Prinzip gleichen Stellbefehle 5b an den Supervisor 1, wobei jedoch bei den Netzdaten 4b der zweiten Regelstufe 3b eine Ausfallsicherheit nicht garantiert ist. Der Supervisor 1 entscheidet, basierend auf den Regelstufen 3a,3b zugeordneten Prioritäten und der aktuellen Netzsituation, d.h. der Auslastung der verfügbaren Netzknoten, welche Stellbefehle 5a,5b in Form von Steuerbefehlen 6 an den dem Transformator zugehörigen Aktuator 7 weitergeleitet werden. Aufgrund der besseren Beobachtung des Netzes sollte nach Möglichkeit zu jeder Zeit die zweite Regelstufe 3b eine höhere Priorität aufweisen und deren Stellbefehle 5b vom Supervisor 1 als Steuerbefehle 6 an den Aktuator 7 weitergeleitet werden. Hierbei erfolgt nur eine Änderung auf die Stellbefehle 5a der ersten lokalen Regelstufe 3a durch den Supervisor 1, wenn es zu Kommunikationsausfällen im Niederspannungsnetz kommt, sodass die zweite Regelstufe 3b keine zuverlässigen Netzdaten 4b bekommt und so den aktuellen Status ändert.

In einer weiteren Ausführungsform des redundanten Regelungskonzepts ist ein Wählverfahren denkbar, bei dem der Supervisor 1 den Regelschritt basierend auf den Stellbefehlen 5a,5b aller Regelstufen 3a,3b entscheidet. Dabei können sogenannte intelligente Kriterien, beispielsweise in Form der wenigsten beteiligten Aktuatoren 7 zur Spannungshaltung oder der kürzesten und damit schnellsten bzw. zuverlässigsten Kommunikationswege zu möglichen Aktuatoren 7 miteinbezogen werden. Mit anderen Worten führt der Supervisor 1, basierend auf seinen Eingangsdaten und Informationen (Prioritäten, Stellbefehle 5a,5b, Gesamtnetzdaten 4), eine Art Nutzwertanalyse durch, auf deren Basis er entscheidet welche Steuerbefehle 6 er an den(die) Aktuator(en) 7 weiterleitet, wobei gegebenenfalls die Steuerbefehle 6 vorab in einem Ausgangsabbild 2b zur Weiterleitung gesammelt und/oder aufbereitet werden.

### Bezugszeichenliste:

- 1: Supervisor;
- 2a: Eingangsabbild;
- 2b: Ausgangsabbild;
- 3a: erste Regelstufe;
- 3b: zweite Regelstufe;
- 4: Gesamtnetzdaten;
- 4a: Netzdaten für Regelstufe 1;
- 4b: Netzdaten für Regelstufe 2;
- 5a: Stellbefehle / Statusinformation von Regelstufe 1;
- 5b: Stellbefehle / Statusinformation von Regelstufe 2;
- 6: Steuerbefehle; und
- 7: Aktuator

## Patentansprüche

1. Verfahren zur Regelung einer Spannungseinspeisung in ein Niederspannungsnetz mittels Gesamtnetzdaten (4), welche aus dem Niederspannungsnetz, welches zahlreiche Netzknoten aufweist, von mehreren Netzknoten gewonnen werden, **dadurch gekennzeichnet,**
**dass** zumindest zwei redundante Regelstufen (3a, 3b), welche jeweils einem Netzknoten und jeweils einer fest zugeordneten Priorität zugeordnet sind und mit jeweils unterschiedlichen Netzdaten (4a, 4b) des Niederspannungsnetzes versorgt werden, wobei die jeweils unterschiedlichen Netzdaten (4a, 4b) an jeweils einer bestimmten Stelle im Niederspannungsnetz gemessene Messwerte umfassen, wobei die zumindest zwei redundanten Regelstufen (3a, 3b) mit einem Supervisor (1) derart verschaltet sind, dass dieser basierend auf eingangsseitigen Stellbefehlen (5a, 5b) einer der zumindest zwei redundanten Regelstufen (3a oder 3b) Steuerbefehle (6) zur Spannungseinspeisung an zumindest einen Aktuator nur weiterleitet, wenn unter Berücksichtigung der jeweiligen Priorität zumindest von einer der zumindest zwei redundanten Regelstufen (3a oder 3b) eine vorgegebene Anzahl der unterschiedlichen Netzdaten gesammelt wurde, und
**dass** die zumindest zwei redundanten Regelstufen (3a, 3b) jeweils eine Statusinformation an den Supervisor (1) senden, welche angibt, ob die jeweilige Regelstufe (3a, 3b) der zumindest zwei redundanten Regelstufen (3a, 3b) die vorgegebene Anzahl der unterschiedlichen Netzdaten (4a, 4b) gesammelt hat.

2. Verfahren zur Regelung einer Spannungseinspeisung nach Anspruch 1, wobei die Gesamtnetzdaten (4) in einem Eingangsabbild (2a) zur Weiterleitung gesammelt und/oder aufbereitet werden.

3. Verfahren zur Regelung einer Spannungseinspeisung nach einem der Ansprüche 1-2, wobei die Steuerbefehle (6) in einem Ausgangsabbild (2b) zur Weiterleitung gesammelt und/oder aufbereitet werden.

4. Verfahren zur Regelung einer Spannungseinspeisung nach einem der Ansprüche 1-3, wobei der Supervisor (1) mit Gesamtnetzdaten (4) versorgt wird, welche von mehreren Netzknoten des Niederspannungsnetzes gewonnen werden.

5. Verfahren zur Regelung einer Spannungseinspeisung nach einem der Ansprüche 1-4, wobei der Supervisor (1) Latenzzeiten für gleichartige Stellbefehle (5a, 5b) vorsieht, durch welche bei einem Übergang zwischen den Regelstufen (3a, 3b) keine raschen sowie gegenläufigen Durchschaltungen auftreten.

6. Verfahren zur Regelung einer Spannungseinspeisung nach einem der Ansprüche 1-5, wobei zumindest eine der zwei Regelstufen (3a, 3b) ausschließlich Netzdaten (4a, 4b) von dem jeweils zugeordneten Netzknoten erhält.

7. Verfahren zur Regelung einer Spannungseinspeisung nach einem der Ansprüche 1-6, wobei eine der zumindest zwei Regelstufen (3a oder 3b) erst dann Stellbefehle (5a, 5b) an den Supervisor (1) aussendet, wenn die eine der zumindest zwei Regelstufen (3a oder 3b) die vorgegebene Anzahl der unterschiedlichen Netzdaten gesammelt hat.

8. Verfahren zur Regelung einer Spannungseinspeisung nach Anspruch 1-7, wobei die Priorität der zumindest zwei redundanten Regelstufen (3a, 3b) durch die Güte der Gesamtnetzdaten (4) beeinflusst wird, wobei die Güte vorzugsweise Messpunkte an Netzknoten aus dem Niederspannungsnetz miteinbezieht.

9. Verfahren zur Regelung einer Spannungseinspeisung nach Anspruch 8, wobei die Priorität der zumindest zwei redundanten Regelstufen (3a, 3b) ferner durch eine Länge eines Übertragungsweges von der einen der zumindest zwei Regelstufen (3a, 3b) zu dem der einen der zumindest zwei Regelstufen (3a, 3b) zugehörigen Netzknoten beeinflusst wird.

10. System zur Regelung einer Spannungseinspeisung in ein Niederspannungsnetz mittels Gesamtnetzdaten (4), welche aus dem Niederspannungsnetz, welches zahlreiche Netzknoten aufweist, von mehreren Netzknoten gewinnbar sind, **dadurch gekennzeichnet, dass**
• das System zumindest zwei redundante Regelstufen (3a, 3b) aufweist, welche eingangsseitig jeweils einem Netzknoten und jeweils einer fest zugeordneten Priorität zugeordnet sind und mit jeweils unterschiedlichen Netzdaten (4a, 4b) des Niederspannungsnetzes versorgbar sind,
• das System ferner einen Supervisor (1) aufweist, wobei die jeweiligen unterschiedlichen Netzdaten (4a, 4b) an jeweils einer bestimmten Stelle im Niederspannungsnetz gemessene Messwerte umfassen, wobei die zumindest zwei redundanten Regelstufen (3a, 3b) mit dem Supervisor (1) ausgangsseitig jeweils derart verschaltet sind, dass der Supervisor (1) derart ausgestaltet ist, basierend auf den eingangsseitigen Stellbefehlen (5a, 5b) einer redundanten Regelstufe (3a oder 3b) Steuerbefehle (6) zur Spannungseinspeisung an zumindest einen Aktuator nur weiterzuleiteen, wenn unter Berücksichtigung der jeweiligen Priorität zumindest von einer der zumindest zwei redundanten Regelstufen (3a oder 3b) eine vorgegebene Anzahl der unterschiedlichen Netzdaten gesammelt wurde, und
• **dass** die zumindest zwei redundanten Regelstufen (3a, 3b) derart ausgestaltet sind, jeweils eine Statusinformation an den Supervisor (1) zu senden, welche angibt, ob die jeweilige Regelstufe (3a, 3b) der zumindest zwei redundanten Regelstufen (3a, 3b) die vorgegebene Anzahl der unterschiedlichen Netzdaten (4a, 4b) gesammelt hat.

## Claims

1. Method for controlling a voltage feed-in into a low voltage network by means of overall network data (4), which is obtained from the low voltage network, which has numerous network nodes, by several network nodes, **characterised in that** at least two redundant control stages (3a, 3b), which are assigned in each case to a network node and in each case to a fixedly assigned priority and are supplied with in each case different network data (4a, 4b) of the low voltage network, wherein the in each case different network data (4a, 4b) comprises measured values measured in each case at a specific point in the low voltage network, wherein the at least two redundant control stages (3a, 3b) are interconnected with a supervisor (1) in such a way that, on the basis of input-side control commands (5a, 5b) of one of the at least two redundant control stages (3a or 3b), this forwards control commands (6) for the voltage feed-in to at least one actuator only when a predetermined quantity of different network data has been collected while taking into account the respective priority of at least one of the at least two redundant control stages (3a or 3b), and
**in that** the at least two redundant control stages (3a, 3b) in each case send an item of status information to the supervisor (1), which specifies whether the respective control stage (3a, 3b) of the at least two redundant control stages (3a, 3b) has collected the predetermined quantity of different network data (4a, 4b) .

2. Method for controlling a voltage feed-in according to claim 1, wherein the overall network data (4) is collected and/or prepared in an input image (2a) for forwarding purposes.

3. Method for controlling a voltage feed-in according to one of claims 1 - 2, wherein the control commands (6) are collected and/or prepared in an output image (2b) for forwarding purposes.

4. Method for controlling a voltage feed-in according to one of claims 1 - 3, wherein the supervisor (1) is supplied with overall network data (4), which is obtained from several network nodes of the low voltage network.

5. Method for controlling a voltage feed-in according to one of claims 1 - 4, wherein the supervisor (1) provides for latency periods for control commands (5a, 5b) of a similar type, by means of which no quick and counter-rotating through-connections occur during a transition between the control stages (3a, 3b).

6. Method for controlling a voltage feed-in according to one of claims 1 - 5, wherein at least one of the two control stages (3a, 3b) receives network data (4a, 4b) exclusively from the respectively assigned network node.

7. Method for controlling a voltage feed-in according to one of claims 1 - 6, wherein one of the at least two control stages (3a and 3b) only emits control commands (5a, 5b) to the supervisor (1) when the one of the at least two control stages (3a or 3b) has collected the predetermined quantity of different network data.

8. Method for controlling a voltage feed-in according to claim 1 - 7, wherein the priority of the at least two redundant control stages (3a, 3b) is influenced by the quality of the overall network data (4), wherein the quality preferably includes measurement points at network nodes from the low voltage network.

9. Method for controlling a voltage feed-in according to claim 8, wherein the priority of the at least two redundant control stages (3a, 3b) is further influenced by a length of a transmission path from the one of the at least two control stages (3a, 3b) to the network node associated with the one of the at least two control stages (3a, 3b).

10. System for controlling a voltage feed-in into a low voltage network by means of overall network data (4), which can be obtained from the low voltage network, which has numerous network nodes, from several network nodes,
**characterised in that**
• the system has at least two redundant control stages (3a, 3b), which are assigned on the input side in each case to a network node and in each case to a fixedly assigned priority and can be supplied with in each case different network data (4a, 4b) of the low voltage network,
• the system further has a supervisor (1), wherein the different network data (4a, 4b) in each case comprises measured values measured in each case at a specific point in the low voltage network, wherein the at least two redundant control stages (3a, 3b) are interconnected with the supervisor (1) on the output side in each case so that the supervisor (1) is designed, on the basis of the input-side control commands (5a, 5b) of a redundant control stage (3a or 3b), to forward control commands (6) for the voltage feed-in to at least one actuator only when a predetermined quantity of different network data has been collected while taking into account the respective priority of at least one of the at least two redundant control stages (3a or 3b, and
• that the at least two redundant control stages (3a, 3b) are designed in each case to send an item of status information to the supervisor (1), which specifies whether the respective control stage (3a, 3b) of the at least two redundant control stages (3a, 3b) has collected the predetermined quantity of different network data (4a, 4b) .

## Revendications

1. Procédé de commande d'une alimentation en tension d'un réseau basse tension à l'aide de données de réseau globales (4) récupérées du réseau basse tension - qui comporte de nombreux noeuds de réseau - de plusieurs noeuds de réseau, **caractérisé en ce qu'**au moins deux étages de commande redondants (3a, 3b) qui sont affectés chacun à un noeud de réseau et à une priorité à attribution fixe et alimentés en données de réseau (4a, 4b) respectivement différentes du réseau basse tension, les données de réseau (4a, 4b) respectivement différentes comportant des valeurs de mesure mesurées respectivement à un point déterminé du réseau basse tension, les au moins deux étages de commande redondants (3a, 3b) sont reliés à un superviseur (1) de telle sorte que le superviseur ne transmet des ordres de commande (6), sur la base d'ordres de réglage (5a, 5b) côté entrée d'un des au moins deux étages de commande redondants (3a ou 3b), pour l'alimentation en tension à au moins un actionneur que si en tenant compte de la priorité respective, d'un au moins un des au moins deux étages de commande redondants (3a ou 3b) a récupéré un nombre prédéfini des données de réseau différentes et **en ce que** les au moins deux étages de commande redondants (3a, 3b) transmettent une information d'état chacune au superviseur (1) indiquant si l'étage de commande (3a, 3b) respectif des au moins deux étages de commande redondants (3a, 3b) a récupéré le nombre prédéfini des données de réseau (4a, 4b) différentes.

2. Procédé de commande d'une alimentation en tension selon la revendication 1, dans lequel les données de réseau globales (4) sont récupérées et/ou traitées dans une image d'entrée (2a) pour leur retransmission.

3. Procédé de commande d'une alimentation en tension selon l'une des revendications 1 à 2, dans lequel les ordres de commande (6) sont récupérées et/ou traitées dans une image de sortie (2b) pour leur retransmission.

4. Procédé de commande d'une alimentation en tension selon l'une des revendications 1 à 3, dans lequel le superviseur (1) est alimenté en données de réseau globales (4) récupérées de plusieurs noeuds de réseau du réseau basse tension.

5. Procédé de commande d'une alimentation en tension selon l'une des revendications 1 à 4, dans lequel le superviseur (1) prévoit des temps d'attente pour des ordres de réglage (5a, 5b) similaires qui évitent des connexions simultanées rapides ou opposées lors d'un passage entre les étages de commande (3a, 3b).

6. Procédé de commande d'une alimentation en tension selon l'une des revendications 1 à 5, dans lequel au moins l'un des deux étages de commande (3a, 3b) reçoit exclusivement des données de réseau (4a, 4b) du noeud de réseau respectivement attribué.

7. Procédé de commande d'une alimentation en tension selon l'une des revendications 1 à 6, dans lequel l'un des au moins deux étages de commande (3a ou 3b) ne transmet des ordres de réglage (5a, 5b) au superviseur (1) que lorsque l'un des au moins deux étages de commande (3a ou 3b) a récupéré le nombre prédéfini des données de réseau différentes.

8. Procédé de commande d'une alimentation en tension selon les revendications 1 à 7, dans lequel la priorité des au moins deux étages de commande redondants (3a, 3b) est influée par la qualité des données de réseau globales (4), la qualité incluant de préférence des points de mesure à des noeuds de réseau du réseau basse tension.

9. Procédé de commande d'une alimentation en tension selon la revendication 8, dans lequel la priorité des au moins deux étages de commande redondants (3a, 3b) est par ailleurs influée par une longueur d'une voie de transmission depuis l'un des au moins deux étages de commande (3a, 3b) au noeud de réseau attribué à l'un des au moins deux étages de commande (3a, 3b).

10. Système de commande d'une alimentation en tension d'un réseau basse tension à l'aide de données globales de réseau (4) susceptibles d'être récupérables depuis le réseau basse tension - qui comporte de nombreux noeuds de réseau - de plusieurs noeuds de réseau, **caractérisé en ce que**
• le système comporte au moins deux étages de commande redondants (3a, 3b) attribués, côté entrée, à un noeud de réseau chacun et à une priorité à attribution fixe et susceptibles d'être alimentés en données de réseau respectivement différentes (4a, 4b) du réseau basse tension,
• le système comporte par ailleurs un superviseur (1), les données de réseau différentes (4a, 4b) respectives comportant des valeurs de mesure mesurées respectivement à un point déterminé, les au moins deux étages de commande redondants (3a, 3b) étant reliés du côté sortie au superviseur (1) de telle sorte que le superviseur (1) est conçu de manière à ne retransmettre des ordres de commande (6), sur la base des ordres de réglage (5a, 5b) côté entrée d'un étage de commande redondant (3a ou 3b) pour l'alimentation en tension à au moins un actionneur que si en tenant compte de la priorité respective, d'au moins un des au moins deux étages de commande redondants (3a ou 3b) a récupéré un nombre prédéfini des données de réseau différentes, et
• **en ce que** les au moins deux étages de commande redondants (3a, 3b) sont conçus de telle sorte qu'ils transmettent une information d'état chacune au superviseur (1) indiquant si l'étage de commande (3a, 3b) respectif des au moins deux étages de commande redondants (3a, 3b) a récupéré le nombre prédéfini des données de réseau (4a, 4b) différentes.
